# EUROPÄISCHE PATENTSCHRIFT

(11) **EP 0 338 324 B1**
(45) Veröffentlichungstag und Bekanntmachung des Hinweises auf die Patenterteilung: **20.10.1993**
(21) Anmeldenummer: 89105976.8
(22) Anmeldetag: 05.04.1989
(51) Int. Cl.: G21C 9/00

(54) **Kernkraftwerk mit einer Sicherheitshülle**
Nuclear power plant with security confinement
Centrale nucléaire avec confinement de sécurité

(30) Priorität: 18.04.1988 DE 3812893
(43) Veröffentlichungstag der Anmeldung: 25.10.1989
(73) Patentinhaber: SIEMENS AKTIENGESELLSCHAFT, 80333 München (DE)
(72) Erfinder: Eckardt, Bernd, Dipl.-Ing., D-6454 Bruchköbel (DE)

(56) Entgegenhaltungen:
- WO-A-88/01901
- DE-A- 1 471 624
- DE-B- 1 176 099
- NUCLEAR ENGINEERING INTERNATIONAL, Band 33, Nr. 404, März 1988, Seiten 36,37, Sutton, Surrey, GB; HELMUT ENGEL: "Germans use sliding pressure containment venting system"

## Beschreibung

Die Erfindung betrifft ein Kernkraftwerk mit einer Sicherheitshülle zum Einschluß von Aktivitätsträgern und mit einem Auslaß als Überdrucksicherung, der aus der Sicherheitshülle über ein Filter in die Atmosphäre führt, wobei das Filter einen Venturiwäscher in einem Behälter mit einer Waschflüssigkeit und einen Faserfilter umfaßt, und wobei der Behälter über einen Gasauslaß mit einem Kamin in Verbindung steht.

Kernkraftwerke der vorgenannten Art sind Gegenstand der älteren Patentanmeldungen 87 11 5681.6- (EP-A-269.847) und 88 10 3829.3- (EP-A-285.845), und ein ähnliches Kernkraftwerk ist aus der Druckschrift "Nuclear Engineering International", Band 33, Nr. 404, März 1988, Seiten 36-37 bekannt.

Die Erfindung geht von der Aufgabe aus, durch eine besondere Gestaltung und Anordnung der Venturiwäscher und Faserfilter die Druckentlastung der Sicherheitshülle zu verbessern, wobei die Aktivitätsrückhaltung möglichst groß sein soll.

Erfindungsgemäß ist vorgesehen, daß der Auslaß des Venturiwäschers oberhalb des Waschflüssigkeitsspiegels liegt und dort mit einem Prallblech zur Tropfenabscheidung versehen ist, und daß der dem Gasauslaß vorgeschaltete Faserfilter ein Metallfaserfilter ist, der mindestens zwei Schichten mit einer Dicke von 10 bis 20 mm aufweist, von denen die erste als Feuchtigkeitsabscheider eine Faserdicke von 8 bis 20 µm und die zweite als Aerosolabscheider eine Faserdicke von 2 bis 7 µm hat.

Weitere Ausbildungen der Erfindung sind in den Ansprüchen 2 bis 11 definiert.

Bei der Erfindung wird in einfacher, d.h. unaufwendiger Weise mittels einer freiausblasenden passiv betriebenen Venturianordnung und direkt nachgeschalteten Tiefbett-Metallfaserelementen mit Feuchtigkeitsabscheidung der bei einer Druckentlastung austretende Gas- und Dampfstrom (Auslaßstrom) mit einer Effektivität ≧ 99 % von Aerosolen und ≧ 99 % von elementarm Jod bei besonders kompakter Bauweise gereinigt.

In die Venturis wird der Auslaßstrom mittels des als Treibdruck dienenden Überdrucks aus der Sicherheitshülle eingeleitet und in ihrem abgetauchten Hochgeschwindigkeitsbereich wird die Waschflüssigkeit passiv eingespeist. Dabei sollte im Geschwindigkeitsbereich ≧ 50 m/s gearbeitet werden, wobei eine sehr effektive Aerosolrückhaltung erreicht wird. Bei geringen Gasdurchsätzen im Geschwindigkeitsbereich < 50 m/s sinkt die Aerosolabscheideleistung, so daß nur noch eine Rückhaltung von 90-95 % erfolgt. Der mit Tropfenmitriß und Restaerosolen versetzte Gasstrom wird deshalb in einem Tiefbett-Feinstfaserfiltermatten entfeuchtet und nachgereinigt. Die Kombination Venturi/Tiefbettfaserfilter wirkt so, daß besonders bei geringen Durchsätzen die reduzierte Venturieabscheideleistung voll durch die verlängerten Filterverweilzeiten und somit Erreichen hoher Filterwirksamkeiten mit Dekontaminationsfaktoren von ≧ 100 voll kompensiert wird. Somit wird ohne zusätzliche Leistungsregelung ein gleichbleibend hoher Aerosolabscheidegrad von ≧ 99 % erreicht.

Zur Verbesserung des Jodabscheidegrades kann in den verwendeten Flach- oder Rundventuris im Abstand ≧ 2 x Kehlenbreite eine zweite Waschflüssigkeitseinspeisung vorgesehen werden. In diesem Bereich ist die Kehlenbreite vorteilhaft um 5 - 20 % vergrößert. Durch diese weitere Venturistufe wird ein um den Faktor 2 höherer Waschflüssigkeitsmitriß und somit eine entsprechende verdoppelte Stoffaustauschflächen zur Jodsorption erreicht, was besonders bei kurzen Venturiverweilzeiten wichtig ist. Deshalb ist diese erfindungsgemäße Ausbildung auch unabhängig vom Waschflüssigkeitsspiegel vorteilhaft.

Zur dauerhaften Jodrückheltung kann die Waschflüssigkeit alkalisiert oder mit Reduktionsmitteln versetzt sein.

Bei extremer Minderlast (z.B. 20 % Auslegungsdurchsatz) stellt sich außerdem über die zweite Venturistufe durch den Rückfall von Tropfen eine zusätzliche Waschflüssigkeitszirkulation ein. Durch diese Betriebsweise wird zum Ausgleich des verringerten Ausstoßes von Waschflüssigkeit über das Venturiende ein Waschflüssigkeitsumlauf/Austausch im Venturi selbst ermöglicht.

Das freie Ausblasen ist weiterhin vorteilhaft, weil dadurch ein Waschflüssigkeitsanstieg durch den Auslaßstrom (Blasenauftrieb) unterbleibt. Den Venturis nachgeschaltet sind Prallabscheider zur Waschflüssigkeitsabscheidung. Die Tiefbett-Metallfaserfilter sind vorzugsweise als Flachtiefbettfilter oder Filterkerzen mit fallendem Faserdurchmessern im Bereich von 2 bis 20 µm ausgestaltet. Die Metallfasern können durch Quetschung oder metallischen Vergießen in metallischen Filterrahmen eingespannt sein.

Direkt am Filter integriert oder am Ende der Filtergassen sind vorteilhafterweise Schwerkraft-Tropfenabscheideelemente zur Feinabscheidung von Tropfenmitriß installiert. Die abgeschiedene Flüssigkeit sorgt weiterhin für ein kontinuierliches Rückspülen der Aerosole aus den Filtern in die Waschflüssigkeit. Dabei kann es jedoch um eine zu starke Kondensation beim Anfahren zu vermeiden, vorteilhafterweise die Waschflussigkeit auch vorgeheizt werden.

Durch den geringen Höhenbedarf der Venturi/Waschflüssigkeits-Anordnung wird es möglich, diese Einheit in einem liegenden, hinsichtlich Innendruckbelastung optimalen zylindrischen Druckbehälter unterzubringen. Weiterhin vorteilhaft ist, daß bei Anfahren und Aufwärmen des Waschwassers durch eintretenden kondensierenden Dampf im Bereich der halben Höhe (etwa Venturioberkante), auch die größte Fläche zur Verfügung steht und somit nur ein geringer Flüssigkeitshöhenanstieg auftritt. Flüssigkeitsstandsreduktionen sind bis kurz oberhalb des Venturischlitzes möglich, so daß eine Waschflüssigkeitsregulierung erst nach Betriebszeiten von mehr als 24 Stunden erforderlich wird. Durch leicht unterschiedlich tiefe Anordnung der Venturis im Waschwasser kann das Venturiteillastverhalten noch verbessert werden.

Die Metallfaserflachfilter werden vorzugsweise paarweise angeordnet und gegeneinander abgestützt, so daß Belastungen aus kontinuierlichen oder plötzlich auftretenden Strömungskräften gegeneinander abgetragen werden. Die Filterkerzenanordnung erfolgt bevorzugt horizontal mit direkt nachgeschalteten Tropfenabscheidern.

Die Venturi- und Filtereinrichtung wird durch Öffnen der Sicherheitshüllenabschlußarmaturen oder einer Berstscheibe in Betrieb genommen. Besonders für Niederdruck-Sicherheitsbehälter ergibt sich in der Kombination dieser Wascheinrichtung mit erforderlichen Treibdrücken ≦ 0,3 bar und im Druckverlust günstigen Rohrleitungen und Armaturen eine optimale Möglichkeit des Druckabbaus.

Es kann jedoch auch durch eine in der Austrittsleitung angeordnete Drossel ein Überdruck in der Wascheinrichtung erzeugt werden, der eine Verkleinerung dieser Einrichtung ermöglicht.

Zur näheren Erläuterung der Erfindung werden anhand der Zeichnung Ausführungsbeispiele beschrieben. Es zeigt:
- FIG 1: das Schema einer erfindungsgemäßen Druckentlastung für die Sicherheitshülle eines Siedewasserreaktors,
- FIG 2 und 3: in zwei zueinander senkrechten Schnitten einen Druckbehälter mit Venturiwäscher und Filter,
- FIG 4 und 5: in zwei zueinander senkrechten Schnitten einen anderen Druckbehälter mit Venturiwäscher und Filter,
- FIG 6: eine Venturiwäscheanordnung in größerem Maßstab,
- FIG 7: eine andere Venturiwäscheanordnung in größerem Maßstab,
- FIG 8 und 9: eine Venturidüse mit zwei Einlaßbereichen, und zwar einmal bei Vollast bis Halblast und zum anderen bei Teillast von weniger als 20 % der Vollast.

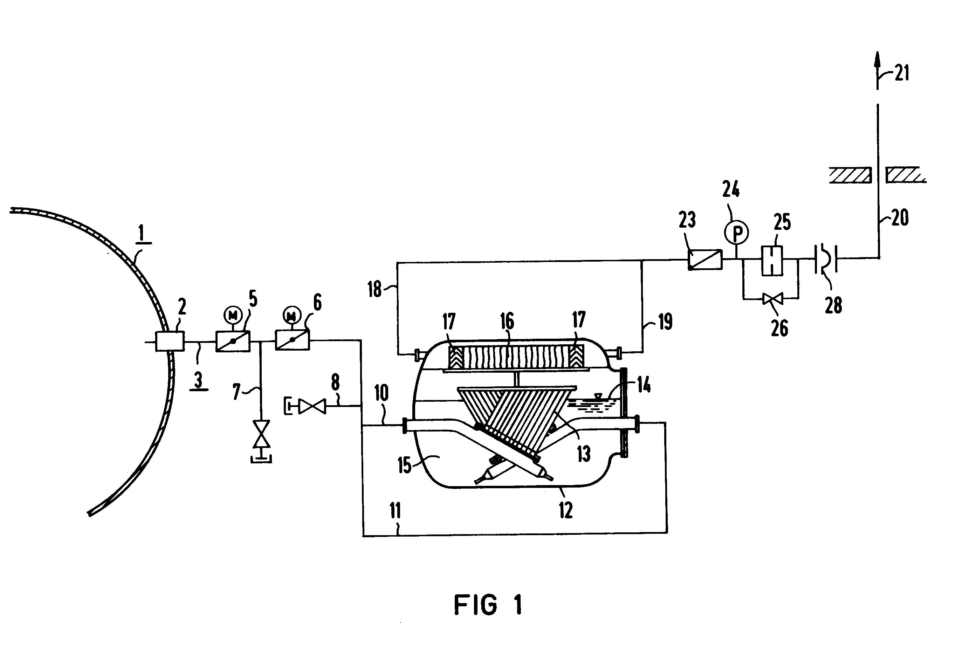

Die in FIG 1 mit 1 bezeichnete Sicherheitshülle eines nicht weiter dargestellten Siedewasserreaktors ist in Form einer Stahlkugel ausgebildet. In ihrer Wand ist eine Rohrleitungsdurchführung 2 vorgesehen, von der eine Entlastungsleitung 3 ausgeht. Im Zuge der Entlastungsleitung liegen zwei gleiche motorbetätigte Absperrklappen 5 und 6, zwischen denen ein Prüfanschluß 7 zur Feststellung der Dichtigkeit vorgesehen ist. Die Nennweite der Entlastungsleitung 3 beträgt 250 mm. Über einen Anschluß 8 kann Stickstoff, z.B. zum Inertisieren, eingespeist werden.

Die Entlastungsleitung 3 führt mit zwei Zweigen 10 und 11 zu gegenüberliegenden Seiten eines liegenden zylindrischen Druckbehälters 12, in dem Venturiwäscher 13 vorgesehen sind, die durch den Spiegel 14 einer Waschflüssigkeit 15 ragen. Über den Venturiwäschern 13 sitzen Metallfaser-Filterelemente 16, denen Tropfenabscheider 17 nachgeschaltet sind. Von diesen führen parallele Zweige 18 und 19 zu einer Auslaßleitung 20, die zu einem durch den Pfeil 21 angedeuteten Kamin führt.

Die Auslaßleitung 20 beginnt mit einer Rückschlagklappe 23, der eine Druckmeßstelle 24 nachgeschaltet ist. In der anschließenden Drosselstelle 25 wird dafür gesorgt, daß die der Entlüftungsleitung 20 vorgeschalteten Teile der Druckentlastungseinrichtung, insbesondere die Venturiwäscher 13 und die Filter 16, mit Gleitdruck betrieben werden, so daß stets ein maximaler Durchsatz erreicht wird. Parallel zu der Drosseleinrichtung 25 ist ein Absperrventil 26 angeordnet. Diesem ist eine Berstscheibe 28 nachgeschaltet, die der Nennweite von 250 mm der Ausblaseleitung 20 angepaßt ist.

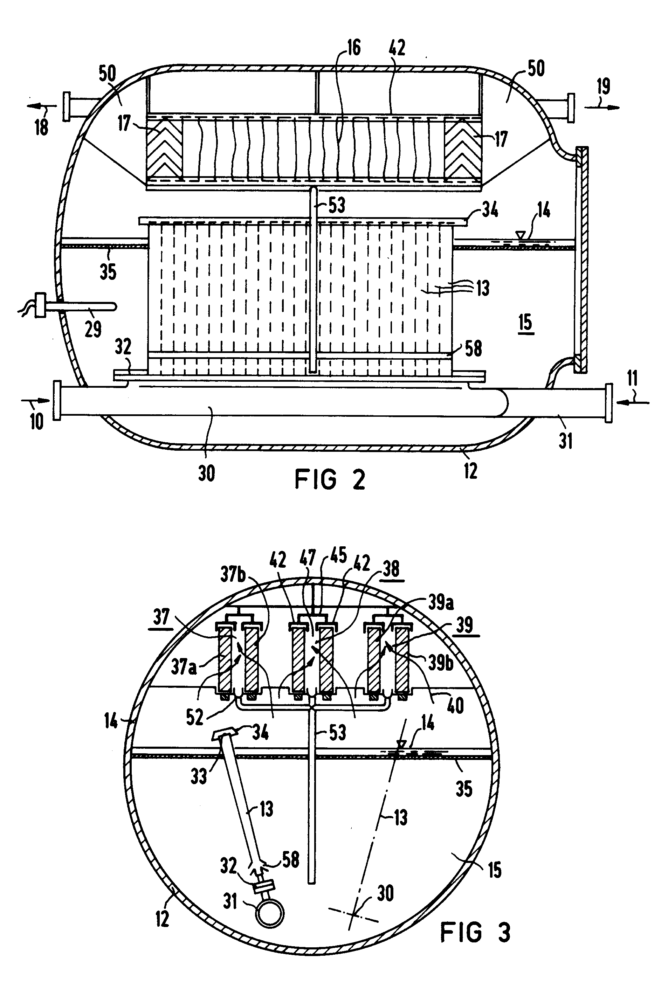

In den FIG 2 und 3 ist eine Ausführungsform des Druckbehälters 12 mit dem Venturiwäscher 13 näher dargestellt, bei dem mit einer elektrischen Heizpatrone 29 eine Vorwärmung für den Anfahrbetrieb vorgenommen werden kann. Man erkennt, daß die durch Pfeile 10 und 11 angedeuteten Zweige der Entlastungsleitung 3 zu zwei geradlinigen, parallel nebeneinander horizontal liegenden Rohrabschnitten 30 und 31 führen, auf denen die Venturiwäscher 13 in zwei seitlich voneinander weggeneigten Reihen mit einem Flansch 32 im rechten Winkel zur Rohrachse befestigt sind. Die Ausblasöffnung 33 der Venturiwäscher 13 ragt über den Wasserspiegel 14 hinaus bis zu einem als Tropfenabscheider dienenden Prallblech 34. Dicht unter dem Wasserspiegel 14, der wenig über der halben Höhe des Behälters 12 und damit im Bereich der größten horizontalen Weite liegt, ist ein Siebblech 35 angeordnet, das zur Vergleichsmäßigung der Strömungsverhältnisse im Behälter 12 dient.

Die FIG 3 läßt erkennen, daß die Metallfaserfilter 16 und die Tropfenabscheider 17 in Form von drei in Längsrichtung des Behälters 12 verlaufenden Flachfiltern 37, 38 und 39 ausgebildet sind, die aus je zwei parallelen Streifen a und b bestehen. Die mit vertikaler Höhenrichtung angeordneten Streifen sind gegeneinander abgestützt, damit die Belastungen aus Strömungskräften auf kurzen Weg gegeneinander abgetragen werden. Sie werden in Richtung der Pfeile 40 von außen nach innen durchströmt. Die Rahmen 42 der Filterstreifen a, b umfassen je drei Metallfaserschichten mit einer Dicke zwischen 5 und 20 mm. Die Faserdicke ist unterschiedlich. Sie liegt bei der innerern Schicht bei 2 bis 7, vorzugsweise 4 µm, während für die äußeren Schichten Faserdicken zwischen 8 bis 20 µm, insbesondere 12 bis 15 µm, vorgesehen sind. Die Rahmen 42 der Streifen a, b sind oben durch Deckelbleche 45 verbunden. Der damit abgeschlossene Innenraum 47 führt an den Enden zu Sammlern 50, an die die Auslaßleitungen 18 und 19 angeschlossen sind, die durch die entsprechende Pfeile angedeutet sind. Von der Unterseite 52 der Filterelemente 37, 38, 39 führt eine Flüssigkeitsauslaßleitung 53 durch die Siebplatte 35 in den unteren Bereich des Flüssigkeitsvolumens 15.

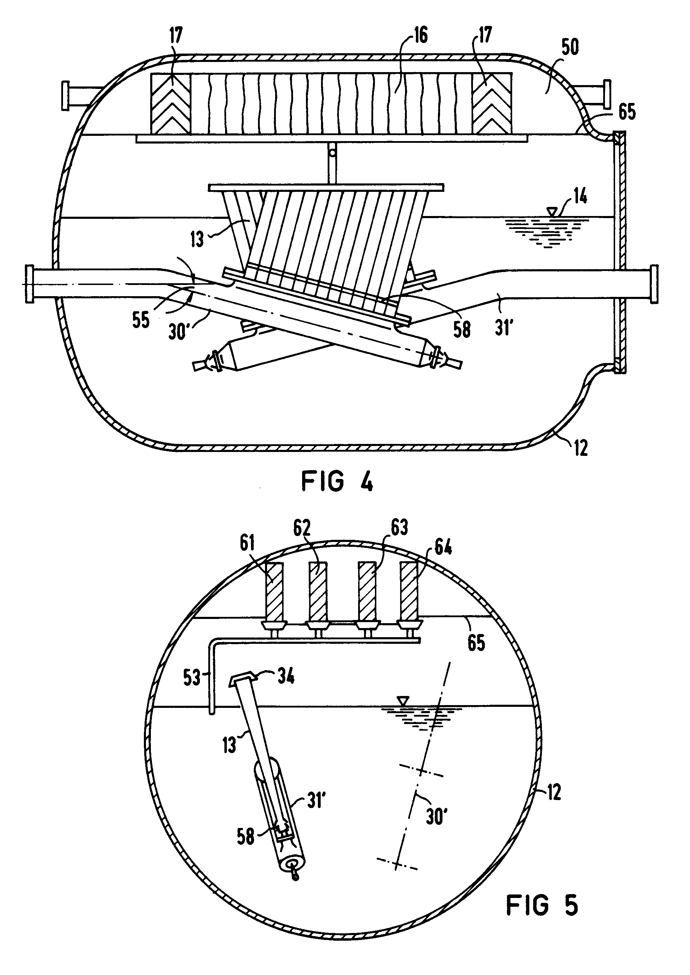

Bei der in den FIG 4 und 5 dargestellten Variante der Venturiwäscher 13 sind die Rohre 30′ und 31′ um einen Winkel 55 von etwa 5° bis 15° gegenüber der Horizonalen geneigt angeordnet. Rechtwinklig zu den geneigten Rohren 30′, 31′ sind die Venturidüsen 13 so angeflanscht, daß ihre Einlaßöffnungen 58 in einer unterschiedlichen Höhe unter dem Flüssigkeitsspiegel 14 liegen. Die Längen der Venturidüsen 13 sind so abgestuft, daß sie in die gleiche Höhe zu dem gemeinsamen Prallblech 34 ragen, das sich geradlinig in horizontaler Richtung erstreckt, wie in FIG 4 zu sehen ist.

Die Filter 16 sind hier mit vier paarweise zusammengefaßten Abschnitten 61, 62, 63 und 64 ausgeführt, die wiederum die erfindungsgemäße Schichtung von verschiedenen Metallfaserdicken haben und an einem Blech 65 sitzen, das die Sammler 50 nach unten trennt.

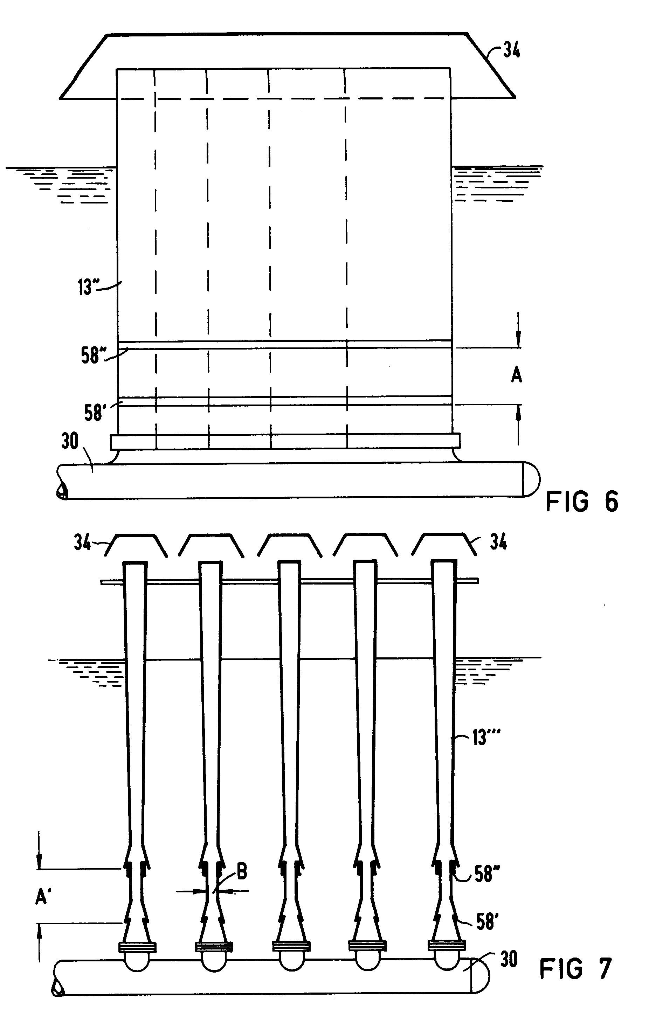

In FIG 6 ist als Einzelheit in größerem Maßstab ein Flachventurianordnung 13˝ dargestellt, die von dem Rohr 30 rechtwinklig nach oben aufsteigt. Wie man sieht, sind die Längen der Flachventurirohre 13˝ in Richtung des Rohres 30 unterschiedlich groß. Die Längen können z.B. in dem Verhältnis 1:1,5:2:3:6 gestaffelt sein. Dabei sind zwei übereinanderliegende Einlaßschlitze 58′ und 58˝ vorgesehen. Der Abstand A zwischen den Schlitzen 58′, 58˝ beträgt z.B. das 5-fache der Kehlenbreite.

Auch die in FIG 7 dargestellten, von der Rohrleitung 30 rechtwinklig nach oben verlaufenden Rundventuridüsen 13‴, die in gleichem Abstand voneinander angeordnet sind, haben zwei Einlaßbereiche 58′ und 58˝. Der Abstand A′ der Einlaßbereiche 58′, 58˝ liegt beim 3-fachen der Kehlenbreite B.

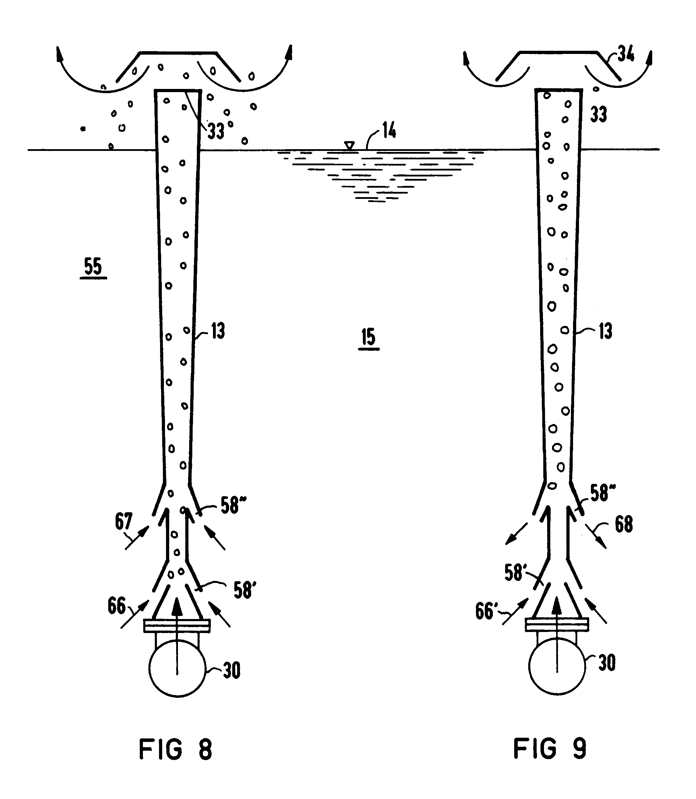

In den FIG 8 und 9 ist die unterschiedliche Wirkungsweise der beiden Einlaßbereiche 58′, 58˝ bei verschiedener Belastung der Venturidüsen 13 dargestellt. Dabei zeigt die FIG 8 den Betrieb im Bereich zwischen Halblast (50 %) und Vollast. Hierbei wird durch die Einlaßbereiche 58′ und 58˝ in gleicher Weise Waschflüssigkeit 15 angesaugt, wie durch die Pfeile 66 und 67 angedeutet ist. Bei noch geringerer Belastung, z.B. bei einer Teillast von 20 % der Vollast, ergibt sich jedoch ein Schlaufenbetrieb, bei dem Waschflüssigkeit 15 nur noch im Bereich 58′ eintritt, wie durch den Pfeil 66′ angedeutet ist. Der darüberliegende Schlitzbereich 58˝ besitzt demgegenüber schon einen geringen Überdruck, der größer ist als die Differenz der Flüssigkeitsdrücke. Deshalb tritt aus dem Bereich 58˝ Waschflüssigkeit und gegebenenfalls Dampf in Richtung der Pfeile 68 aus.

## Patentansprüche

1. Kernkraftwerk mit einer Sicherheitshülle (1) zum Einschluß von Aktivitätsträgern und mit einem Auslaß (2, 3) als Überdrucksicherung, der aus der Sicherheitshülle (1) über ein Filter in die Atmosphäre führt, wobei das Filter einen Venturiwäscher (13) in einem Behälter (12) mit einer Waschflüssigkeit (15) und einen Faserfilter (16) umfaßt, und wobei der Behälter (12) über einen Gasauslaß (20) mit einem Kamin (21) in Verbindung steht,
**dadurch gekennzeichnet,**
daß der Auslaß (33) des Venturiwäschers (13) oberhalb des Waschflüssigkeitsspiegels (14) liegt und dort mit einem Prallblech (34) zur Tropfenabscheidung versehen ist, und daß der dem Gasauslaß (20) vorgeschaltete Faserfilter ein Metallfaserfilter (16) ist, der mindestens zwei Schichten mit einer Dicke von 10 bis 20 mm aufweist, von denen die erste als Feuchtigkeitsabscheider eine Faserdicke von 8 bis 20 µm und die zweite als Aerosolabscheider eine Faserdicke von 2 bis 7 µm hat.

2. Kernkraftwerk nach Anspruch 1,
**dadurch gekennzeichnet,** daß in Strömungsrichtung nach dem Aerosolabscheider eine dritte 5 bis 10 mm dicke Drainageschicht aus Fasern mit 8 bis 20 µm Faserdicken angeordnet ist.

3. Kernkraftwerk nach insbesondere Anspruch 1 oder 2, **dadurch gekennzeichnet,** daß der Venturiwäscher (13) im Bereich der Waschflüssigkeit (15) zwei in seiner Strömungsrichtung mit Abstand (A) voneinander liegende Einlaßbereiche (58',58'') aufweist.

4. Kernkraftwerk nach Anspruch 3, **dadurch gekennzeichnet,** daß der Abstand (A) das Doppelte der Kehlbreite (B) der Venturiwäscher (13) oder mehr beträgt.

5. Kernkraftwerk nach einem der Ansprüche 1 bis 4, **dadurch gekennzeichnet,** daß mehrere Venturiwäscher (13) in der Waschflüssigkeit (15) in unterschiedlicher Höhe angeordnet sind.

6. Kernkraftwerk nach Anspruch 5, **dadurch gekennzeichnet,** daß die Venturidüsen (13) an einem gegenüber der Horizontalen geneigten Rohr (30′,31′) angebracht sind.

7. Kernkraftwerk nach Anspruch 6, **dadurch gekennzeichnet,** daß die Venturidüsen (13) rechtwinklig zu dem Rohr (30′,31′) und damit geneigt gegenüber der Vertikalen verlaufen.

8. Kernkraftwerk nach Anspruch 6 oder 7, **dadurch gekennzeichnet,** daß in einem Behälter (12) zwei unterschiedlich geneigte Rohre (30′,31′) nebeneinander liegen.

9. Kernkraftwerk nach einem der Ansprüche 5 bis 8, **dadurch gekennzeichnet,** daß die Venturiwäscher (13) unterschiedliche Längen haben, so daß sie in einer gemeinsamen horizontalen Ebene enden.

10. Kernkraftwerk nach einem der Ansprüche 1 bis 9, **dadurch gekennzeichnet,** daß die Venturiwäscher (13) in einem liegenden zylindrischen Behälter (12) so angeordnet sind, daß der maximale Füllstand (14) und der Auslaß (33) im Bereich der größten horizontalen Behälterweite liegen.

11. Kernkraftwerk nach einem der Ansprüche 1 bis 10, **dadurch gekennzeichnet,** daß die Metallfaserfilter (16) zum Abtragen von Strömungskräften paarweise miteinander verbunden sind.

## Claims

1. Nuclear power plant having a containment (1) for enclosing activity carriers and having an outlet (2, 3) as an excess pressure safety device which leads out of the containment (1) by way of a filter into the atmosphere, with the filter comprising a Venturi scrubber (13) in a container (12) with a scrubbing liquid (15) and a fibre filter (16), and with the container (12) communicating by way of a gas outlet (20) with a stack (21), characterised in that the outlet (33) of the Venturi scrubber (13) lies above the scrubbing liquid level (14) and is there provided with a baffle plate (34) for mist collection and in that the fibre filter which is connected upstream of the gas outlet (20) is a metal fibre filter (16) which has at least two layers with a thickness of 10 to 20 mm, the first layer of which, as a moisture collector, has a fibre thickness of 8 to 20 µm and the second layer of which, as an aerosol collector, has a fibre thickness of 2 to 7 µm.

2. Nuclear power plant according to claim 1, characterised in that a third drainage layer, which is 5 to 10 mm thick and is made of fibres with 8 to 20 µm fibre thickness, is arranged in the flow direction downstream of the aerosol collector.

3. Nuclear power plant according to, in particular, claim 1 or 2, characterised in that the Venturi scrubber (13) in the region of the scrubbing liquid (15) has two inlet regions (58', 58'') which lie at a distance (A) from each other in its flow direction.

4. Nuclear power plant according to claim 3, characterised in that the distance (A) amounts to twice the throat width (B) of the Venturi scrubbers (13) or more.

5. Nuclear power plant according to one of the claims 1 to 4, characterised in that several Venturi scrubbers (13) are arranged in the scrubbing liquid (15) at different heights.

6. Nuclear power plant according to claim 5, characterised in that the Venturi nozzles (13) are fitted on a pipe (30', 31') which is inclined relative to the horizontal.

7. Nuclear power plant according to claim 6, characterised in that the Venturi nozzles (13) extend at right angles to the pipe (30', 31') in such a way that they are inclined relative to the vertical.

8. Nuclear power plant according to claim 6 or 7, characterised in that two differently inclined pipes (30', 31') lie side by side in a container (12).

9. Nuclear power plant according to one of the claims 5 to 8, characterised in that the Venturi scrubbers (13) have different lengths so that they end in a colon horizontal plane.

10. Nuclear power plant according to one of the claims 1 to 9, characterised in that the Venturi scrubbers (13) are arranged in a horizontal cylindrical container (12) so that the maximum level (14) and the outlet (33) lie in the region of the greatest horizontal container width.

11. Nuclear power plant according to one of the claims 1 to 10, characterised in that the metal fibre filters (16) are connected with each other in pairs to reduce flow forces.

## Revendications

1. Centrale nucléaire comprenant une enceinte de confinement (1) pour confiner des sources d'activité et une sortie (2,3) servant de sécurité vis-à-vis d'une surpression et menant de l'enceinte de confinement (1) à l'atmosphère par l'intermédiaire d'un filtre, lequel comporte un laveur (13) à venturi dans une cuve (12) avec un liquide de lavage (15) et un filtre en fibres (16), la cuve (12) communiquant avec une cheminée (21) par une sortie pour les gaz (20),
caractérisée
en ce que la sortie (33) du laveur à venturi (13) est audessus du niveau (14) du liquide de lavage et y est munie d'une chicane (34) de dépôt de gouttelettes, et en ce que le filtre en fibres prévu en amont de la sortie (20) pour les gaz est un filtre (16) en fibres métalliques, qui comporte au moins deux couches d'une épaisseur de 10 à 20 mm, dont la première servant de séparateur d'humidité a une épaisseur de fibres de 8 à 20 µm et dont la seconde servant de séparateur d'aérosol a une épaisseur de fibres de 2 à 7 µm.

2. Centrale nucléaire suivant la revendication 1,
caractérisée en ce qu'une troisième couche de drainage en fibres de 5 à 10 mm d'épaisseur et ayant des épaisseurs de fibres de a à 20 µm, est prévue en aval dans la direction de l'écoulement du séparateur d'aérosol.

3. Centrale nucléaire notamment suivant la revendication 1 ou 2,
caractérisée en ce que le laveur à venturi (13) comporte, dans la zone du liquide de lavage (15), deux zones d'entrée (58',58'') se trouvant à distance (A) l'une de l'autre dans sa direction d'écoulement.

4. Centrale nucléaire suivant la revendication 3, caractérisée en ce que la distance (A) représente le double ou plus du double de la largeur (B) du col du laveur à venturi (13).

5. Centrale nucléaire suivant l'une des revendications 1 à 4,
caractérisée en ce que plusieurs laveurs à venturi (13) sont disposés à des niveaux différents dans le liquide de lavage (15).

6. Centrale nucléaire suivant la revendication 5,
caractérisée en ce que les buses de venturi (13) sont montées sur un tube (30', 31') incliné par rapport à l'horizontale.

7. Centrale nucléaire suivant la revendication 6, caractérisée en ce que les buses à venturi (13) s'étendent à angle droit par rapport au tube (30', 31') et en étant donc inclinées par rapport à la verticale.

8. Centrale nucléaire suivant la revendication 6 ou 7, caractérisée en ce que, dans une cuve (12), sont disposés côte-à-côte deux tubes (30', 31') inclinés de manière différente.

9. Centrale nucléaire suivant l'une des revendications 5 à 8,
caractérisée en ce que les laveurs à venturi (13) ont des longueurs différentes de manière à se terminer dans un même plan horizontal.

10. Centrale nucléaire suivant l'une des revendications 1 à 9,
caractérisée en ce que les laveurs à venturi (13) sont disposés dans une cuve (12) cylindrique horizontale, de manière que le niveau maximum (14) de remplissage et la sortie (33) se trouvent dans la partie de la cuve ayant la plus grande étendue horizontale.

11. Centrale nucléaire suivant l'une des revendications 1 à 10,
caractérisée en ce que les filtres (16) en fibres métalliques sont reliés entre eux par paires pour éliminer des forces d'écoulement.
